# EUROPEAN PATENT APPLICATION

(11) **EP 1 840 809 A1**
(43) Date of publication of application: **03.10.2007**
(21) Application number: 07005827.6
(22) Date of filing: 21.03.2007
(51) Int. Cl.: G06Q 10/00, H04M 3/42

(54) **Method and central processing unit for providing a ranking service for athletes**

(30) Priority: 25.01.2007 EP 07001648; 21.03.2006 EP 06005742
(71) Applicant: Vodafone Holding GmbH, 40213 Düsseldorf (DE)
(72) Inventor: Hoeksel, Sebastiaan, 6229 VN Maastricht (NL); Van den Bos, Lambert, 6247 AG Gronsveld (NL)
(74) Representative: Cullinane, Marietta Bettina

(57) **Abstract**

The present invention relates to a Method for ranking athletes participating in a competition over a communication system, wherein participant-related information data which includes at least location-related information data is received at a central processing unit (2) from at least one mobile device (1, 1', 1") of at least one participant of the competition, wherein the information data is received and processed during the activity of the participant. Furthermore, the invention relates to a central processing unit for providing a ranking service for athletes via a communication system.

## Description

The present invention relates to a method and a central processing unit for providing a ranking service for athletes.

With the ever growing interest in fitness and competition it has become common practice to share training results with other athletes. Presently this sharing of training results is for example being carried out by displaying the results on means that are accessible to other athletes, e.g. a web site on the internet.

In order to exchange or display training results, the athlete has to enter his data into the respective database. The gathering of information and inputting of data into a database is complex, as the relevant data comprises location data, which is not always available to the athlete. To facilitate the sharing of such information, systems have been suggested, wherein the gathering of the location data is automated. An example of such a system is described in CA 2 305 663. With the device suggested in the prior art document, location data is being collected by means of a GPS receiver. In addition condition information, such as temperature, is gathered the usage of sensors. After the race, the data from the device is being transferred to a computer and can be posted on the Internet from there. Other athletes or interested third parties can then access the information.

The drawback of such solutions is that athletes can only use the provided services before or after an exercise.

With prior art solutions of tracking athletes, where the participants of an event such as a race, i.e. the athletes, carry a responder tag with short range radio capabilities, for example a radio frequency identification tag (RFID) locations may be determined and may allow the determination of the time of an athlete at a certain fixed point along the track. However, information on distance travelled by an athlete at a specific time during competitive sport events, which allows for a ranking of the athletes cannot be provided. This is, because the responder transmits a unique identifier only when it is activated by an electromagnetic field. At regular distances along the track of the athletes, designated read points are provided to activate the responders. The read points may be used to measure the time when an individual athlete passes the read point. Such information is, however, not available continuously over time and can only be measured at fixed distances determined by the location of the read points. In addition, with this approach it is not possible to measure and compare the times and distances of all athletes of an event simultaneously, which makes it impossible to generate a ranking of the athletes during the event, where the distance after a given time rather than a time at a specific distance is necessary.

The problem to be solved by the present invention is therefore to provide a solution allowing improved possibilities to provide evaluation of athlete's performance.

The present invention is based on the finding, that this problem can be solved by using real-time information of the activities of an athlete.

According to a first aspect the problem is solved by a method for ranking athletes participating in a competition over a communication system, wherein participant-related information data which includes at least location-related information data is received at a central processing unit from at least one mobile device of at least one participant of the competition, characterized in that the information data is received and processed during the activity of the participant, i.e. during the competition or race.

Ranking according to the present invention is the determination of the relative position of one athlete to at least one other athlete at a given point in time. The relative position may be identified by the distances travelled by individual participants at a given time, rather then by mere comparison of locations of the participants. With the present invention is therefore possible to conduct virtual races, where the participants use different tracks. The participation in the competition is carried out via a communication system, which preferably is a wireless communication network, such as a GPRS or UMTS based network. The participant-related information data which includes at least location-related information data may be obtained at a mobile terminal device of the communication network, in particular at a mobile phone of the athlete. The location-related information data, which may also be referred to as location derived information data, may be data measured via a positioning system such as GPS. This information data may indicate the current position or location of the athlete. This data may be processed within the mobile phone or within the positioning system to provide a distance travelled by the athlete, e.g. form the start line. The central processing unit which receives the location-related information data of the participant may be a server within the communication system or a server on a connected network such as the Internet.

In case the participant-related information data including at least location-related information data which is received at the central processing unit is the mere indication of the present location of the athlete or participant, the information data may be processed at the central processing unit by determining a distance between the present location of the athlete and a start point.

As the information data is transmitted to the central processing unit during the activity of the participant, i.e. during the race or competition, a real-time processing of the data is possible. In addition, as the information data is received from a mobile device, the distances at which information data can be received and for which the information data can be processed is not limited to fixed points as in the prior art solution, where information was only available at fixed read points.

Only by providing such real-time processing, the actual rank of the athlete, i.e. relative position of an athlete at a given time to another athlete at the same point in time, will be possible.

Such real-time information data can also be used for additional purposes within a community service for athletes. Athletes according to the present invention are people who are exercising. The ranking service will be used in particular by athletes, such as professional athletes or people performing competitive sports. Other community services which are possible due to the real-time processing of information data may be used by athletes such as people going for a walk, cycling to work or in their spare time, and the like.

The processing of the information data at the central processing unit may comprise the calculation of a distance between a present location of the athlete and a start line. The processing may, however, also comprise a comparison of information data received from one athlete with other information data. According to one embodiment, upon receipt of information data from a mobile device the central processing unit compares the information data to information data received from at least one other participant, i.e. at least one competitor. Alternatively or additionally, the central processing unit may compare the information data to information data stored at the central processing unit. In the first case, the information data of the at least one other participant will be information data received from an athlete, i.e. competitor, presently participating in the same competition or race as the athlete from whom the information data which is to be compared was originally received. This means, a real-time ranking of two or more participants of a current race or competition is being performed.

In the second embodiment where the information data received from one participant is compared to information stored in the central processing unit, the stored information data may be information data of the same participant or a different participant obtained at a previously conducted race or competition. Such a comparison may for example allow the determination of whether a world record or other record is reached.

The processing of the received information data may further comprise processing with stored data such as geographical data. For example the steepness of a track may be processed with the received information data to account for a difference in steepness of the tracks used by different athletes. Also health related data received from a participant or from participants of the competition may be included in the processing of the information data. For example, the heart rate of a competitor may be indicated to an athlete together with his ranking. It will, hence, be possible to provide an athlete for example with the information that he is on rank two and that the athlete being on rank one is approaching a threshold value for his heart rate. The threshold value may be stored in a user profile on the central processing unit. Finally, the processing of the information data may also include other information to generate coaching information. Such coaching may for example be applied in competitions or races where athletes act in teams. If for example a threshold value for the heart rate of one team member is reached, the other team members, who have not reached their threshold values, can be informed to speed up in order to keep or improve the rank of the team.

The participant-related information data preferably comprises time-related information. The time-related information is preferably an indication of the time when a specific location-related information data has been obtained at the mobile device. By providing time-related information, such as a time stamp, together with the location-related information data, a comparison of locations of two athletes at a given point in time is possible. Alternatively, the central processing unit may provide information received from a mobile device with a time stamp upon receipt. In cases where location-related information data is processed at the central processing unit immediately upon receipt with other location related data received at the same point in time, the indication of time is not mandatory.

The processed information data is preferably a ranking of an athlete relative to other participants of a present competition, e.g. first place. Alternatively or additionally, the processed information data may be a ranking of an athlete relating to at least one participant of a previous competition. In the latter case, a ranking of an athlete currently performing in a competition compared to for example a record established at a previous competition will be possible.

The processed information data may be transferred or transmitted from the central processing unit to the participant, i.e. the mobile device of the participant, from whom the information data had originally been received. The transmission of the processed information data will be realized via the communication system, in particular via the wireless communication network, to which the mobile device of the participant is connected, i.e. from which signals can be received at the mobile device. By providing the processing results to the athlete, he will be made aware of his present rank in the competition or the difference to a record. The processed information data may be output at the mobile device via audio signals, video signals or haptic signals, such as vibration of the mobile device.

Alternatively or additionally, the processed data can be made available to at least one participant different from the participant from whom the information data had originally been received at the central processing unit, i.e. to a competitor. Also spectators not participating in the competition can be provided with access to the processed information data. For athletes, i.e. a participant and his competitors currently participating in the race or competition, the processed information data will be provided to their mobile device via the communication system, in particular the mobile communication network. For spectators, the information may also be provided to a mobile device via the wireless communication network, or may be made available at another terminal such as a PC connected to the Internet. In the later case, the processed information data may be displayed on a website.

The information data stored at the central processing unit, which is used for processing information data received from an athlete during a current race, is preferably position and/or time data relating to a different participant, i.e. a competitor. It is, however, also possible to use position and/or time data relating to the same participant, i.e. the participant from whom the information data is currently being received. In this case, results from earlier competitions of the participant may be used. The time and position data may be the mere indication of a position at a given time. Alternatively, the position and time data may be a distance and a time period. In this case, the processing of currently received information data with data stored on the central processing unit can be accelerated.

According to a further aspect, the present invention relates to a central processing unit for providing a ranking service for athletes via a communication system. The central processing unit is characterized in that the central processing unit comprises a receiving unit for receiving participant-related information data which comprises at least location-related information data from at least one mobile device of a participant during the activity of the participant, i.e. during the competition, a processing entity for processing the participant-related information data, wherein the processing entity is at least temporarily connected to a transmission unit for transmitting the processed information data to at least one participant.

The receiving unit, the processing entity and the transmission unit may at least partially be realized as software components within the central processing unit. The units and/or entity may be realized as separate units / entities or may at least partially be combined. In particular the receiving and transmitting units may be combined in one single unit.

By providing a receiving unit that can receive information data from more than one participant during the competition, real-time ranking becomes possible. Since in addition to the receiving unit also a transmission unit is provided, a real-time communication with the athletes currently participating in a competition or race is realized. The receiving unit and transmission unit are preferably set up to receive and transmit information data signals from and to mobile devices such as mobile phones. The transmission and receipt may be via other network components such as gateways.

The central processing unit preferably comprises a comparison unit for comparing the received participant-related information data to other received information data and/or to information stored in a storage unit in the central processing unit. For this purpose the comparison unit is preferably connected to the receiving unit and or to a storage unit. The comparison unit forms part of the processing entity and the output of the comparison unit may be further processed or may be transmitted without further processing to a mobile device of one or more participants of a competition.

Also the input to the comparison unit may be processed information data. For example location-related information data received from a participant and a competitor may be processed with geographical data, e.g. characteristics of the track, before being compared to each other. Also health data from a competitor or a team member may be processed with information data before being input into the comparison unit.

Features and advantages described with reference to the inventive method also relate to the inventive central processing unit, where applicable, and vice versa.

The present invention will now be described in detail with reference to the attached Figures, wherein:
Figure 1 shows a schematic structure of a system to be used for one embodiment of the inventive method; and
Figure 2 shows a schematic depiction of information data according to an embodiment of the inventive method.

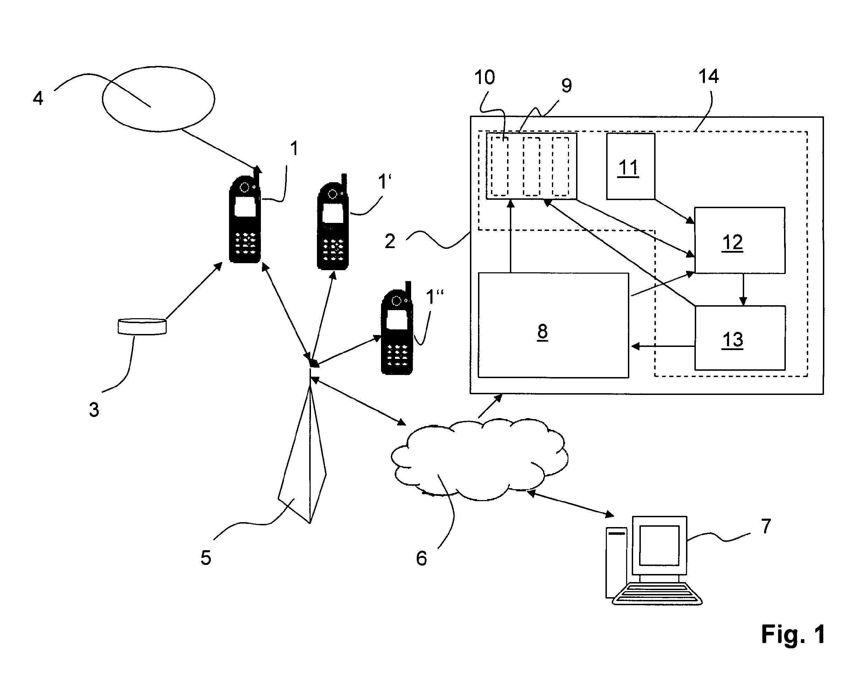

In Figure 1 the system comprises several mobile devices 1, 1' and 1" represented by mobile or cellular phones as well as a remotely located central processing unit 2. Each of the mobile devices 1, 1' and 1" is assigned to an athlete (not shown). For the sake of clarity the usage of the mobile device 1, 1', 1" in the inventive method will hereinafter mainly be described relating to only one mobile device 1. The other mobile devices 1' and 1" may be used in the same way.

In the embodiment shown in Figure 1, the mobile device 1 is connected to a sensor 3, which for example can be attached to the athletes arm or leg. The connection between the sensor 3 and the mobile device 1 maybe wireless or by means of an appropriate plug provided at the mobile device 1 for cable connection. Furthermore, Figure 1 schematically shows a positioning system 4, e.g. a GPS system, which uses the mobile device 1 as a receiver for location-related data.

The communication connection between the mobile device 1 and the central processing unit 2 is represented by a mobile network and the Internet 6. The mobile network is indicated by means of a single base station 5.

Also a computer 7 is shown to be connected to the remote central processing unit 2 via the Internet 6.

In the depicted embodiment, the structure of the central processing unit 2 comprises five units 8, 9, 11, 12 and 13, wherein the units 9, 11, 12 and 13 can be referred to as the processing entity 14. These units 8, 9, 11, 12 and 13 may be realised as separate physical units or may partially be combined. In particular the units maybe realised as software components or programs.

The combined receiving and transmission unit 8 is provided for receiving signals and data from and transmitting signals and data to the mobile device 1 via the mobile network and the Internet 6. In addition to the receiving and transmission unit 8 a storage unit 9 is provided. Within the storage unit 9 user profiles 10 are being stored. Furthermore a storage unit for geographical data 11 is provided within the remote processing unit 2. The storage unit for geographical data 11 can be combined with the storage unit 9. The central processing unit 2 further comprises a comparison unit 12 as well as an instruction signal creation unit 13.

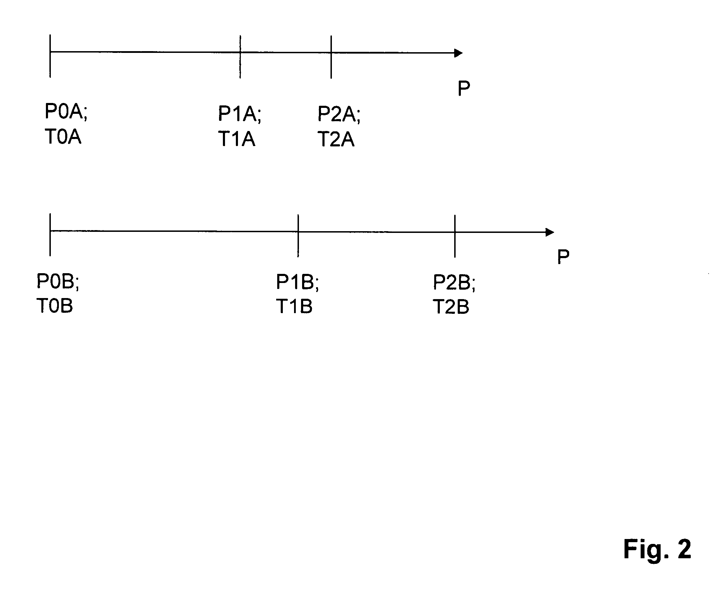

A ranking of athletes can be performed as will now be described in detail with reference to Figure 1 and Figure 2.

User A who is participating in a competition, for example a race, carries his mobile phone 1 or has the mobile phone 1 attached to his body or inserted into a pocket of his clothing. User B who is participating in the same race as user A and will hereinafter also be referred to as the competitor also carries his mobile phone 1'. At a start point of the race user A may be at a location P0A and User B may be at a location P0B. The location will be determined by the positioning system 4, which will transmit the respective location-related information data to the mobile phones 1 and 1', respectively. The location POA will be transmitted from the mobile phone 1 to the central processing unit 2. At the central processing unit 2, the location POA may be stored in storage unit 9. The location P0A may be stored together with an indication of the time at which the location POA was determined T0A or with an indication of the time at which the location POA was received at the central processing unit 2. The location POA and also the time TOA will be stored in the storage unit 9 linked to the user A, i.e. for user A. TOA will preferably be set to zero.

In regular intervals, the current location P1A, P2A, etc. at the times T1A, T2A, etc. of the user A will be transmitted to the central processing unit 2. With the starting location P0A being stored in the storage unit 9 of the processing unit, the distance travelled by user A can be determined at the central processing unit 2. Alternatively, the distance travelled by user A can be determined at the positioning system 4 or in the mobile phone 1 and can then be sent to the central processing unit 2. In either case, the distance travelled by user A will be available at the central processing unit 2.

Also for user B the current locations P1 B, P2B, etc. at the times T1 B, T2B, etc will be transmitted to the central processing unit 2. At the central processing unit 2, the distance travelled by user B can be calculated. Alternatively, the distance travelled by user B can be determined in the positioning system 4 or in the mobile phone 1' and can then be transmitted to the central processing unit 2.

Preferably the point of time at which the information data is transmitted to the central processing unit 2 are identical for user A and user B as well as for other competitors, i.e. TOA equals TOB, T1A equals T1 B, etc.

As the distance travelled by the respective user A or B will be available for different points of time, a real-time ranking can be carried out at the central processing unit 2. In particular, the distance travelled by user A (P1A-POA) can be compared to the distance travelled by user B (P1 B-P0B) in the same period of time, e.g. 15 minutes.

The ranking can be performed by comparing information data on the distance travelled by user A and B received at the receiving unit 8 in the comparison unit 12 of the central processing unit 2. Alternatively, if only the position of the users A and B but not the actual distance travelled is being transmitted to the central processing unit 2, the distance may be determined by using the positions P0A and P0B stored in the storage unit 9 at the central processing unit 2 for the respective users, e.g. in the personal profiles 10.

The signal creation unit 13 will receive the output of the comparison unit 12 and will create a respective signal. In particular a signal indicating the rank of user A or user B may be created. The signal will then be transmitted via the transmission unit 8 to the mobile phones 1 and/or 1'. In addition or alternatively, the signal may be transmitted to a server on the Internet 6 from where spectators can view the results, e.g. via a PC 7.

In a different embodiment the position-related information data of user A, i.e. P0A, P1A, etc. can be compared at the central processing unit to position-related information data of a user C, who is not participating in the current race. In this case the position-related information data POC, P1C, etc. together with the respective time information TOC, T1 C, etc. is stored in the storage unit 9 as user profile 10 for the user C from a previous race.

The ranking of the athletes may be complemented with additional information for the user. In addition to determining the current rank for a user, it is also possible to supply the users A, B, etc. with coaching information. As the position information and time information can for example be provided at the central processing unit 2 together with indications of the physical condition of the respective user, determined via the sensor 3, a user may not only be notified of his rank but also about, for example the fact that his competitor user B has a higher heart rate than his. Also information concerning the condition of the race track, e.g. steepness of the track can be transmitted to the user and may also be considered in the ranking. If for example two users are using different tracks but are competing against each other, the distance travelled by a user on a steep track may be considered to be longer than the same distance travelled on a track having less steepness. The information on the tracks and track conditions may be stored in the storage unit 11 of the central processing unit.

Preferably an athlete wanting to participate in a competition and wanting use the ranking and/or community service for a race or competition, will register with the service. He can register at the central processing unit 2 for example via his mobile device 1 or by using a computer 7. The central processing unit 2 may then suggest a race event based on user data provided by the athlete and for example stored in the user profile 10. If another athlete has already registered for the same sport and/or track, the athlete signing in may register to the community, which would then comprise two athletes. A community or group may also comprise one or more inactive participants. Those inactive participants may be the trainer or coach of the athlete and/or spectators.

The invention allows the conducting of real-time competition game. Normally outdoor competitions are difficult, because a fixed infrastructure has to be setup along side the competition route. In addition every athlete needs to carry some form of user identity that can be read by sensors of the fixed infrastructure. With the invention these time and cost consuming measures are no longer necessary. In the present invention, the central processing unit 2 can manage a set of competition routes. For each competition route a high score list can be stored that can include both real-time, that means predicted, and finished positions. The athletes can be identified by the mobile device 1 used to establish the network connectivity to the central processing unit. Preferably the geographic location is continuously measured and used to verify that athletes remain on the track. Hence, cheating can be determined without the necessity of personal monitoring the track. In addition the measured location together with the stored competition route can be used to guide the athlete over the competition track. Finally, the progress on the competition route together with the determined time since start can be used to predict the athlete's end position in the high score list.

Athletes can compete against high score entries from previous effort in a track, including their own, and against predicted high score entries of ongoing efforts. Hence, the competition becomes more challenging for the athletes. In addition the athletes can compete on competition routes at any point in time and are no longer depended on a specific sport event date or a specific organisation.

Finally, the present invention allows for a group or team coaching for athletes during a competition. In that case, information data received from a mobile device 1 at the receiving and transmission unit 8 for one athlete may be processed in the comparison unit 12 with information data received from other mobile devices 1', 1". In the comparison unit 12 or in a separate unit (not shown) the received information data may be used to generate threshold values or other parameters necessary to generate team coaching instructions.

In one example, the coaching logic applied within the central processing unit 2 determines the reaching of a threshold value of for example the heart rate of one of the participants and informs the other athletes who are member of the team to speed up in order to keep the rank of their team. The threshold value may also be determined in by receiving data, such as health data, from the athletes of the team and determining the highest or lowest value. For example the heart rate may be used in this case. Once this value has been identified, it will be used as a threshold value for further coaching instructions to all athletes of the team. It is also possible to use data stored in the user profiles stored in storage unit 9 to determine a threshold value. For example, the maximum acceptable heart rate of the weakest athlete in the group may be used as a threshold value.

The threshold value, which may be used as a parameter for coaching instructions, may also be a preset group objective. This could be a speed or time value. By using such a threshold value, it will be possible for the coaching functionality to instruct an athlete to speed up if health data received from a team member at the receiving and transmission unit 8 exceeds this value.

The setting of threshold values, data to be used for the calculation of threshold values and other parameters of the coaching logic may be preset in the central processing unit 2 or may be input via the mobile devices 1, 1', 1" or the computer 7 by the athletes.

The present invention thus provides a method that allows for a very flexible and easy to establish ranking service, where applicable together with other community services for athletes, as the information data from the athletes is being transmitted and processed in real-time. With the present invention no separate infrastructure is needed for determining the position of an athlete and a continuous measurement of distance travelled and time period elapsed is possible.

## Claims

1. Method for ranking athletes participating in a competition over a communication system, wherein participant-related information data which includes at least location-related information data is received at a central processing unit (2) from at least one mobile device (1, 1', 1") of at least one participant of the competition, **characterized in that** the information data is received and processed during the activity of the participant.

2. Method according to claim 1, **characterized in that** the central processing unit (2) upon receipt of information data from a mobile device (1, 1', 1 ") compares the information data to information data received from at least one other participant and / or compares the information data to information data stored at the central processing unit (2).

3. Method according to any of claims 1 or 2, **characterized in that** the information data comprises time-related information.

4. Method according to any one of claims 1 to 3, **characterized in that** the processed information data is a ranking of an athlete relating to other participants of a present competition and / or a ranking of an athlete relating to at least one participant of a previous competition.

5. Method according to any of claims 1 to 4, **characterized in that** the processed information data is being transferred to the participant from whom the information data has been received.

6. Method according to any of claims 1 to 5, **characterized in that** the processed data is being made available to at least one participant different from the participant from whom the information data has been received.

7. Method according to any of claims 2 to 6, **characterized in that** the information data stored at the central processing unit (2) is position and/or time data relating to a different participant.

8. Central processing unit for providing a ranking service for athletes via a communication system, **characterized in that** the central processing unit (2) comprises a receiving unit (8) for receiving participant-related information data which comprises at least location-related information data from at least one mobile device (1, 1', 1 ") of a participant during the activity of the participant, a processing entity (14) for processing the participant-related information data, wherein the processing entity (14) is at least temporarily connected to a transmission unit (8) for transmitting the processed information data to at least one participant.

9. Central processing unit according to claim 8, **characterized in that** it comprises a comparison unit (12) for comparing the received participant-related information data to other received information data and/or to information stored in a storage unit (9, 11) in the central processing unit (2).
